# EUROPÄISCHE PATENTSCHRIFT

(11) **EP 1 745 959 B1**
(45) Veröffentlichungstag und Bekanntmachung des Hinweises auf die Patenterteilung: **16.05.2012**
(21) Anmeldenummer: 06014330.2
(22) Anmeldetag: 11.07.2006
(51) Int. Cl.: B60J 7/12

(54) **Cabriolet-Fahrzeug mit zumindest einem den Formverlauf des Dachbezugs stützenden Anlagekörper**
Cabriolet vehicle with at least one strut for supporting the shape of the roof fabric
Véhicule cabriolet avec au moins un corps pour soutenir la forme du toit

(30) Priorität: 21.07.2005 DE 102005034720
(43) Veröffentlichungstag der Anmeldung: 24.01.2007
(73) Patentinhaber: Wilhelm Karmann GmbH, 49084 Osnabrück (DE)
(72) Erfinder: Heselhaus, Udo, 49479 Ibbenbüren (DE)
(74) Vertreter: Kronthaler, Schmidt & Coll.

(56) Entgegenhaltungen:
- EP-A2- 0 352 428
- EP-A2- 1 285 799
- WO-A1-2004/041571

## Beschreibung

Die Erfindung betrifft ein Cabriolet-Fahrzeug mit einem flexiblen Dachbezug, dem zumindest ein den Formverlauf des Bezugs von unten stützender Anlagekörper zugeordnet ist, nach dem Oberbegriff des Anspruchs 1.

Es ist bekannt, zur Formabstützung eines Dachbezugabschnitts nicht nur rohrförmig erstreckte Querspriegel vorzusehen, sondern diesen auch relativ großflächige Anlagekörper zur Unterstützung und Formgebung des bei geschlossenem Dach darüber verlaufenden Bezugs vorzusehen.

Die DE 40 39 888 A1 zeigt ein solches Cabriolet-Fahrzeug. Insbesondere die Ausdehnung der Anlagekörper in Fahrzeuglängsrichtung ist dadurch begrenzt, dass diese Anlagekörper ansonsten einer Einfaltung des Daches hinderlich wären. Zudem ist die Abstützung auf den in Fahrzeugquerrichtung mittleren Bereich, in dem die Spriegel erstreckt sind, beschränkt. Die quer außen liegenden Bereiche des Bezugs können damit nicht abgestützt werden, da die Breite der Spriegel kleiner als die lichte Weite zwischen den äußeren, in Längsrichtung liegenden Gestängeteilen sein muss, um die Faltbarkeit des Daches zu erhalten.

Aus der WO 2004/041571 A1 ist Verdeck für eine Cabriolet-Fahrzeug bekannt, welches mit seitlichen von Dachrahmenprofilen gebildeten Dachsegmenten ausgebildet ist. Zur Reduktion einer Packhöhe des Verdecks im zusammengefalteten Zustand ist das Dachrahmenprofil bei einer Überführung des Verdecks von seiner geschlossenen Position in seine offene Position in Richtung Fahrzeugmitte drehbar und verlagerbar. Die Drehbewegung eines Dachrahmenprofils wird von einer Führungseinrichtung mit einer Führungsstange bewirkt, mittels welcher das Dachrahmenprofil ausgehend von seiner Position bei geschlossenem Verdeck in eine gegenüber dieser Position nach Fahrzeuginnen verlagerten und verdrehten Position bewegbar ist.

Der Erfindung liegt das Problem zugrunde, eine formgebende Abstützung eines flexiblen Dachbezugs zu schaffen, für deren Kraftbeaufschlagung keine separaten Antriebs-oder Steuerungsteile benötigt werden.

Die Erfindung löst dieses Problem durch ein Cabriolet-Fahrzeug mit den Merkmalen des Anspruchs 1. Hinsichtlich vorteilhafter Ausgestaltungen der Erfindung wird auf die weiteren Ansprüche 2 bis 8 verwiesen.

Bei der erfindungsgemäßen Lösung ist durch die Bewegung der Anlagekörper quer auswärts während seiner Aufwärtsbewegung eine Spannbewegung des Bezugs in Querrichtung ermöglicht. Auch dadurch können die bisher nicht gestützten äußeren Seitenbereiche eine zusätzliche Spannung erfahren.

Durch die Bewirkung der Querauswärtsbewegung der Anlagekörper beispielsweise mittels Gleitflächen von sich aufstellenden Querspriegeln des Daches, werden für diese Kraftbeaufschlagung keine separaten Antriebs- oder Steuerungsteile benötigt.

Bei einer vorteilhaften Ausführung der Erfindung ist durch die Zuordnung der Anlagekörper an einem die Dachbewegung bewirkenden und in einer im wesentlichen vertikalen Ebene erstreckten seitlichen Gestänge eine Abstützung der quer außen liegenden Randbereiche des Dachbezugs ermöglicht. Die Anlagekörper können seitlich außerhalb der Erstrekkung der Spriegel liegen, so dass die Abstützung nicht mehr auf die geringe Spriegelbreite beschränkt ist.

Vorteilhaft sind die Anlagekörper von gewölbten Plattenkörpern gebildet, an deren Kontur sich der Bezug anlegt und die dabei insbesondere auch eine seitliche Abstützung der oberen Bezugkante liefern.

Sofern die Anlagekörper bei geschlossenem Dach einen im Bereich der oberen Dachkante längs erstreckten Schenkel aufweisen, kann diese die Kontur der Kante über eine lange Erstreckung in Fahrzeuglängsrichtung unterstützen.

Bei einer nach unten weisenden Ablagemöglichkeit dieses längs erstreckten Schenkels in abgelegter Dachstellung kann dieser Schenkel dennoch platzsparend, etwa vor das Radhaus, einschwenken und behindert die Faltung des Daches nicht. Die Anlagefläche ist dabei vollständig vom Bezug gelöst und kann über eine entsprechende Ausbildung des seitlichen Gestänges optimiert in eine tiefe Ablagestellung gelegt werden.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:

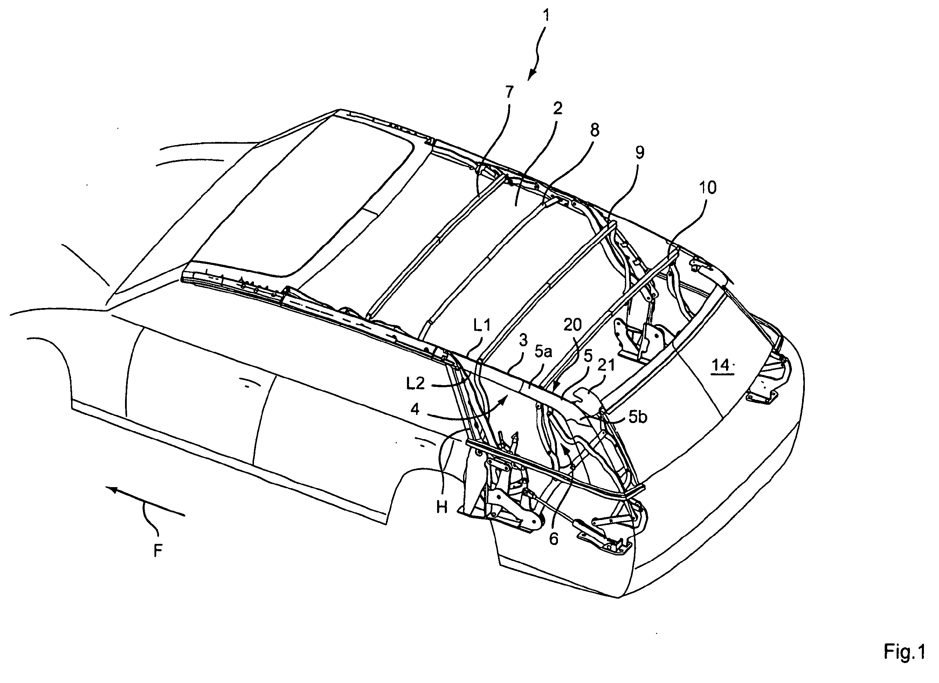

- Fig. 1: eine schematische perspektivische Ansicht von schräg hinten eines erfindungsgemäßen Cabriolet-Fahrzeugs bei geschlossenem Dach mit der Übersicht halber transparent eingezeichnetem Bezug,

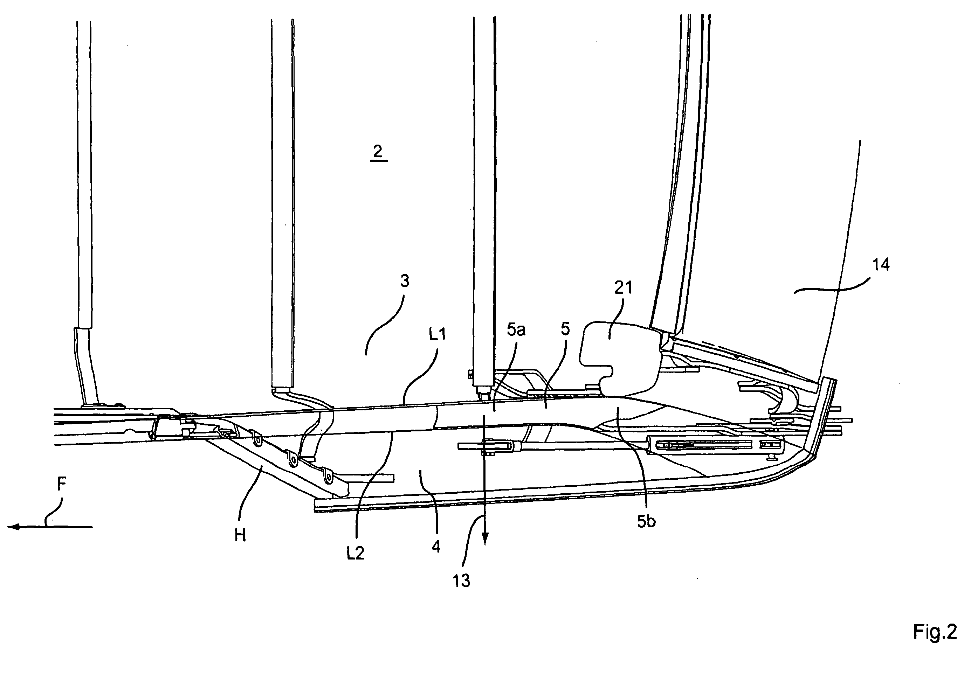

- Fig. 2: den hinten links gelegenen Teilbereich des geschlossenen Daches in Draufsicht,

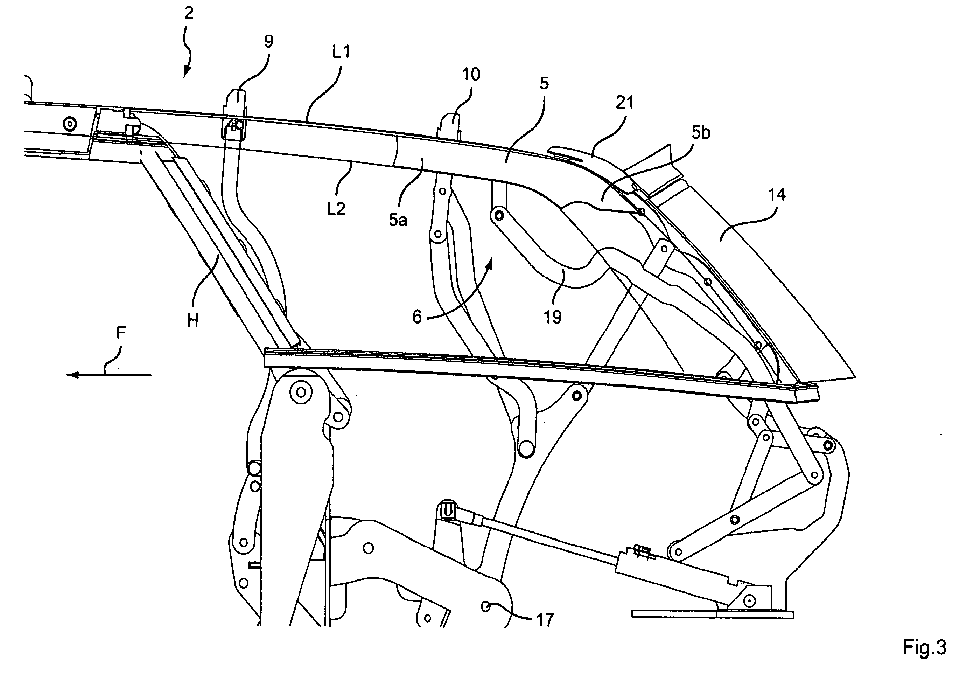

- Fig. 3: den Dachbereich nach Fig. 2 in Seitenansicht,
- Fig. 4: eine ähnliche Ansicht wie Fig. 3 während der beginnenden Dachöffnung,
- Fig. 5: eine ähnliche Ansicht wie Fig. 4 während der weiter fortschreitenden Dachöffnung und Absenkung der Anlagekörper,
- Fig. 6: eine ähnliche Ansicht wie Fig. 5 während der weiter fortschreitenden Dachöffnung und Absenkung der Anlagekörper,
- Fig. 7: eine ähnliche Ansicht wie Fig. 6 während der fast vollständig beendeten Absenkbewegung des Daches,
- Fig. 8: eine ähnliche Ansicht wie Fig. 7 mit vollständig abgesenktem Dach,
- Fig. 9: eine perspektivische Ansicht des hinteren linken Dachbereichs von schräg oben in geschlossener und fast geschlossener Stellung.

Das in der Zeichnung nur schematisch dargestellte Cabriolet-Fahrzeug 1 umfasst ein bewegliches Dach 2, das in seinem geöffneten Zustand im heckwärtigen Karosseriebereich ablegbar ist. Das Dach 2 kann unterschiedlich ausgebildet sein und auch teilweise starre Dachteile umfassen. In jedem Fall ist ein Teil des Daches 2 mit einem flexiblen Bezug 3, der hier transparent eingezeichnet ist, versehen.

Das hier gezeigte Dach 2 hat eine relativ lange Ausbildung und ist zum Beispiel auch geeignet, den Innenraum eines Kombi-, Van- oder Geländefahrzeugs zu überdecken. Aufgrund der Dachlänge stellt sich das Problem, die hinteren seitlichen Bereiche 4, die sich an die sog. Hauptsäulen H entgegen der Fahrtrichtung F nach hinten hin anschließen, und insbesondere deren obere Kantenbereiche, bei geschlossenem Dach 2 in Form zu halten.

Um dies zu ermöglichen, ist in der Zeichnung an jeder Seite ein den Formverlauf des Bezugs an der oberen seitlichen Kante des Bereichs 4 von unten stützender Anlagekörper 5 zugeordnet, an dem die Dachbewegung bewirkenden und in einer im wesentlichen vertikalen Ebene erstreckten seitlichen Gestänge 6 gehalten und von diesem beweglich ist. Die Anlagekörper 5 haben daher keine direkte Anbindung an einen der Spriegel 7, 8, 9 10.

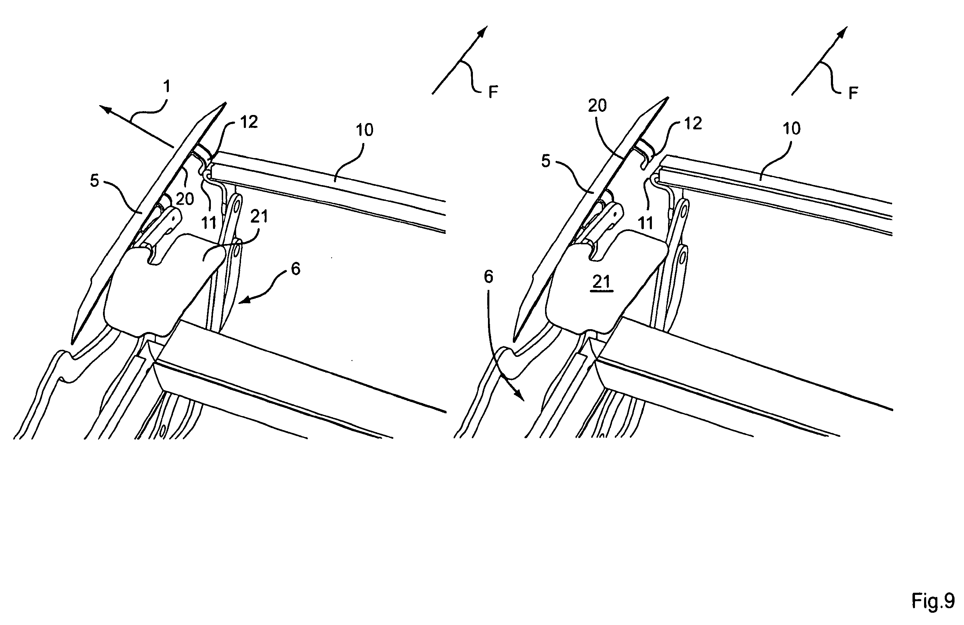

Dennoch ist der Anlagekörper 5 hier von dem bezüglich der Fahrtrichtung F hintersten Spriegel 10 beim Schließen des Daches 2 quer auswärts kraftbeaufschlagbar und dadurch nach außen bewegbar (Fig. 9). Hierzu sind seitlich an den äußeren Rändern des Spriegels 10 Gleitflächen 11 vorgesehen, die kraftschlüssig auf entsprechende Gegenflächen 12, die starr an der dem Bezug 3 abgewandten Innenseite des Anlagekörpers 5 angeordnet sind, einwirken können. Im rechten Bild in Fig. 9 ist der Zustand während des Dachschließens kurz vor Kontaktaufnahme des sich aufrichtenden Spriegels 10 zu der Gegenfläche 12 dargestellt, im linken Bild ist der Spriegel 10 so weit hochgefahren, dass er über seine Gleitfläche 11 den Anlagekörper mit einer Komponente 13 in Fahrzeugquerrichtung nach außen gegen den Bezug 3 presst. Diese Pressung bleibt so bei geschlossenem Dach 2 erhalten, wirkt also nicht nur in der Schließphase.

Der Anlagekörper 5 selbst bildet einen konvex gewölbten Plattenkörper aus, der hier in einer optimierten Wirkung den Bezug in Richtung 13 und nach oben hin spannen kann. Auch eine nur vertikal oder nur horizontal wirkende Abstützung ist je nach Fahrzeug möglich. Hier werden durch die Form des Anlagekörpers 5 im Bezug 3 die beiden gespannten Formlinien L1 und L2 erhalten, die der Linienführung bei einem Fahrzeug mit Festdach entsprechen können. Anders als dargestellt, muss die Außenfläche des Anlagekörpers 5 nicht durchgehend zusammenhängend ausgebildet sein. Auch eine Unterteilung in mehrere Einzelflächen ist möglich, wobei mit der durchgehenden Fläche eine Einklemmgefahr des Bezugs 3 vermieden und ein Abzeichnen des stützenden Anlagekörpers 5 durch den Bezug 3 abgemildert ist.

Die Auflagekörper 5 sind hier leicht L-förmig gebildet und umfassen zur Stützung der oberen Bezugskante einen bei geschlossenem Dach 2 zumindest nahezu horizontal liegenden Schenkel 5a und im hinteren Bereich einen leicht abwärts in Richtung Heckscheibe 14 erstreckten Schenkel 5b. Der lange Schenkel 5a kann eine erhebliche Erstreckung von beispielsweise 10 bis 30 Zentimetern haben, um auch einen langen freien Dachbereich 4 unterstützen zu können und die Ausbildung der Formlinien L1 und L2 zu ermöglichen.

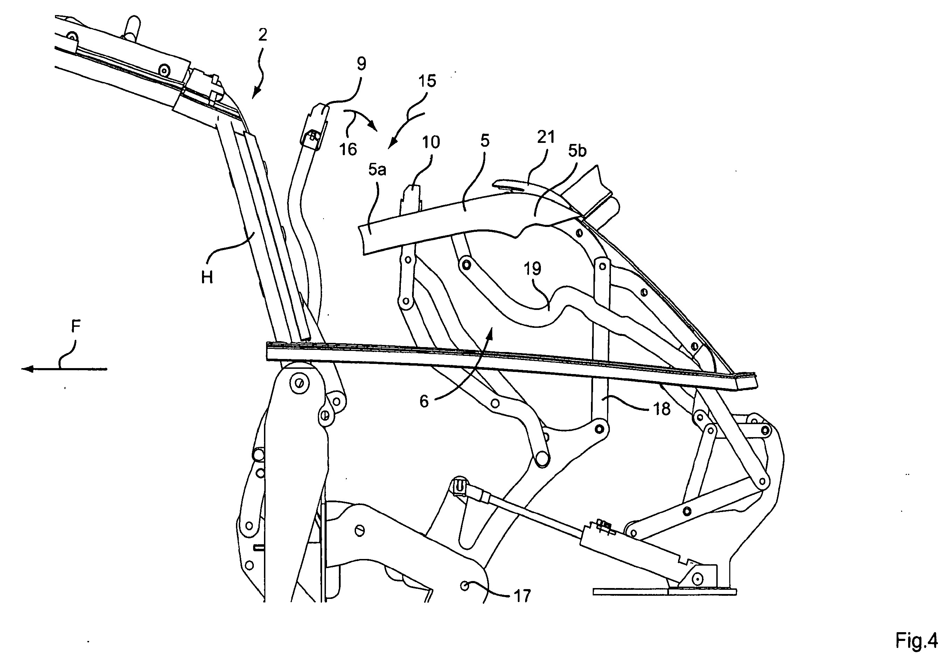

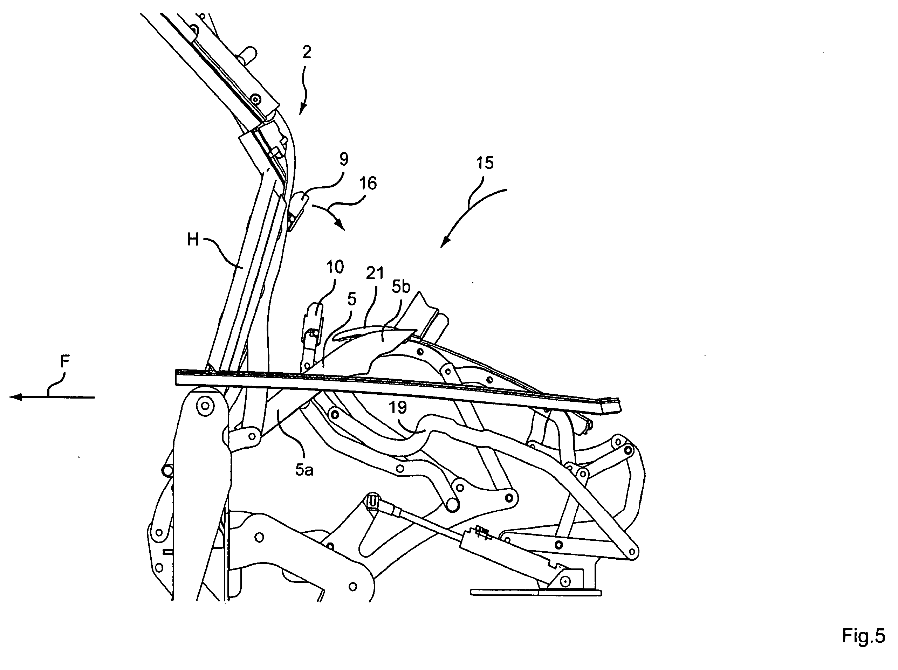

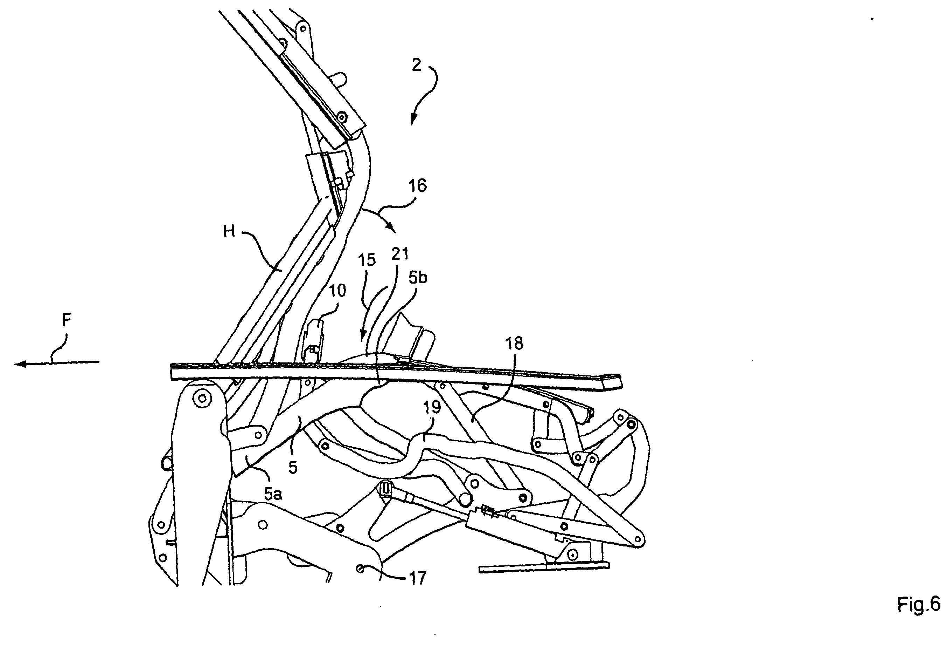

Sofern das Fahrzeug 1 ein Steilheckfahrzeug, wie etwa ein Geländewagen, ist, kann die Dachöffnung beispielsweise gemäß den Figuren 4 bis 8 erfolgen:

Der hintere Teil des Daches 2 schwenkt in Richtung des Pfeils 15 nach vorne, der vordere Dachteil legt sich in Richtung 16 darüber.

Dabei wird der Anlagekörper 5 über den mit dem Hauptlager 17 in Verbindung stehenden Lenker 18 einerseits insgesamt nach unten verlagert und dadurch der Bezug 3 entlastet. Andererseits wird der Anlagekörper 5 auch in sich um eine quer zum Fahrzeug liegende (virtuelle) Horizontalachse verschwenkt, wozu er des weiteren auch noch über den Lenker 19 an einem hinteren Gestängeteil angebunden ist. Die Lenker 18 und 19 bilden somit ein erstes Viergelenk für die Bewegung des Anlagekörpers 5 aus.

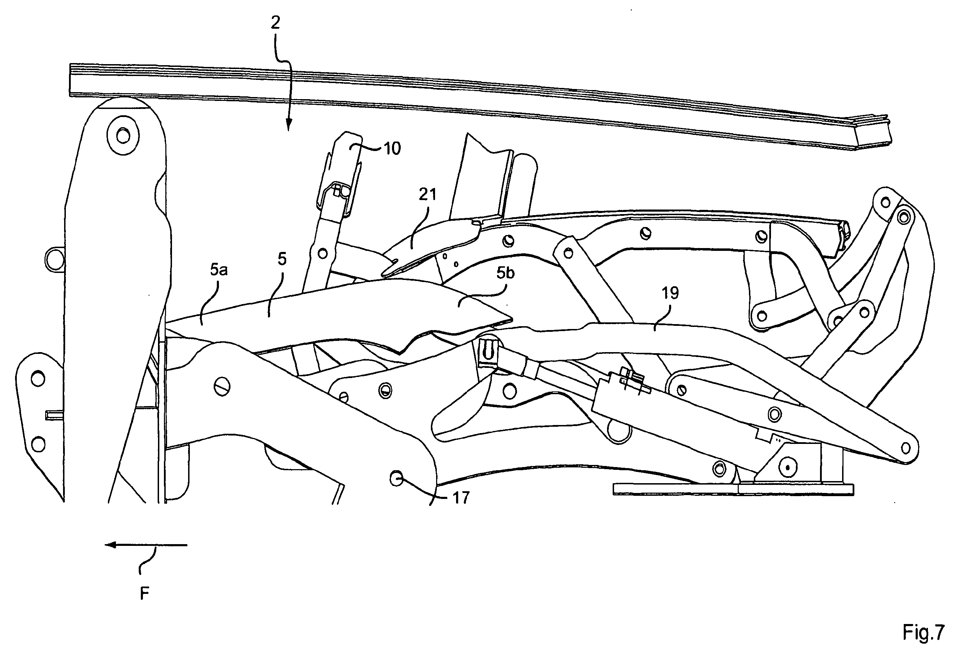

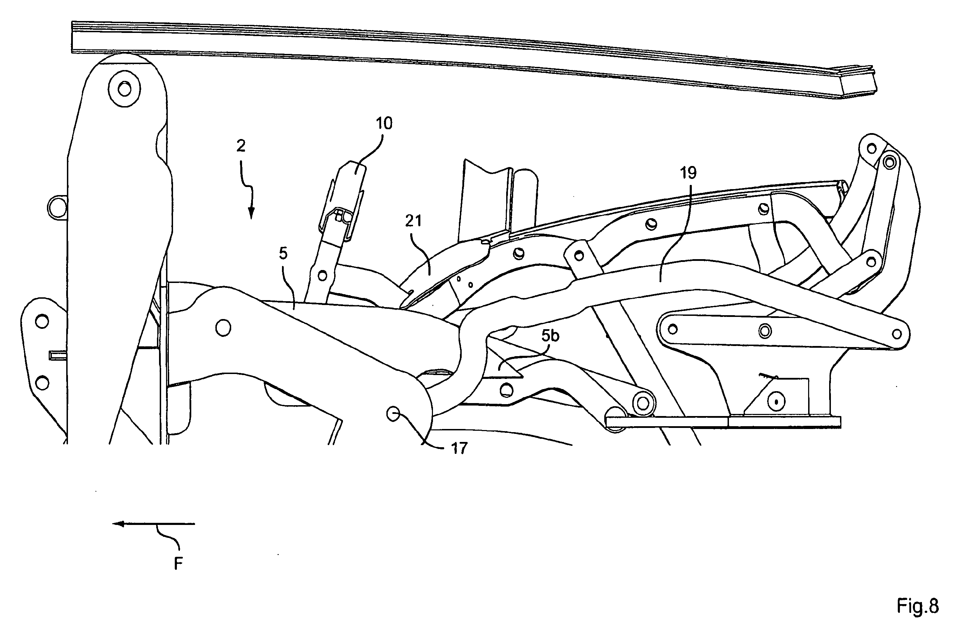

Dadurch kann je nach Ausbildung des Gestänges 6 der der lange Schenkel 5a in abgelegter Dachstellung nach unten weisen und beispielsweise vor einem hinteren Radhaus plaziert werden oder, wie hier dargestellt, kurz vor Erreichen der abgesenkten Endstellung in eine horizontale Lage verschwenkt werden (Übergang von Fig. 7 zu Fig. 8). Dies hängt von den jeweiligen räumlichen Gegebenheiten im Fahrzeug 1 ab.

Um einen harmonischen, knickfreien Übergang des Bezugs 3 auch an der oberen Innenkante 20 der Anlägekörper zu ermöglichen, können weitere, die Auflagefläche des Bezugs 3 vergrößernde Hilfsunterstützungen 21 vorgesehen sein, die hier starr mit der Heckscheibe 14 verbunden und derart geschlitzt sind, dass während der Dachöffnung ein Lenker in den Schlitzraum eintauchen kann.

## Patentansprüche

1. Cabriolet-Fahrzeug (1) mit einem zumindest teilweise mit einem flexiblen Bezug (3) versehenen Dach (2), dem zumindest ein den Formverlauf (L1;L2) des Bezugs (3) von unten stützender Anlagekörper (5) zugeordnet ist, welcher während seiner Aufwärtsbewegung mit einer Komponente (13) quer auswärts bewegbar ist,
**dadurch gekennzeichnet,**
**dass** zwei seitliche Anlagekörper (5) vorgesehen sind, die während des Dachschließens mittelbar oder unmittelbar von einem Querspriegel (10) des Daches (2) mit einer Komponente in Fahrzeugquerrichtung (13) kraftbeaufschlagbar sind.

2. Cabriolet-Fahrzeug (1) nach Anspruch 1,
**dadurch gekennzeichnet,**
**dass** den äußeren Querrändern des Querspriegels (10) jeweils eine Gleitfläche (11) zur Einwirkung auf eine dem Bezug abgewandte Seite (12) der Anlagekörper (5) zugeordnet ist.

3. Cabriolet-Fahrzeug (1) nach Anspruch 1,
**dadurch gekennzeichnet,**
**dass** die Anlagekörper (5) an einem die Dachbewegung bewirkenden und in einer im wesentlichen vertikalen Ebene erstreckten seitlichen Gestänge (6) gehalten und von diesem beweglich sind.

4. Cabriolet-Fahrzeug (1) nach einem der Ansprüche 1 bis 3,
**dadurch gekennzeichnet,**
**dass** die Anlagekörper (5) von gewölbten Platten-körpern gebildet sind.

5. Cabriolet-Fahrzeug (1) nach einem der Ansprüche 1 bis 4,
**dadurch gekennzeichnet,**
**dass** die Anlagekörper (5) bei geschlossenem Dach (2) jeweils einen im Bereich der oberen Dachkante (L1) längs erstreckten Schenkel (5a) aufweisen.

6. Cabriolet-Fahrzeug (1) nach einem der Ansprüche 1 bis 5,
**dadurch gekennzeichnet,**
**dass** die Anlagekörper (5) bei geschlossenem Dach (2) jeweils einen abwärts in Richtung eines Heckfensters (14) erstreckten Schenkel (5b) aufweisen.

7. Cabriolet-Fahrzeug (1) nach einem der Ansprüche 1 bis 6,
**dadurch gekennzeichnet,**
**dass** die Anlagekörper (5) im wesentlichen L-förmig mit einem bei geschlossenem Dach (2) im wesentlichen in Fahrzeuglängsrichtung weisenden langen Schenkel (5a) ausgebildet sind.

8. Cabriolet-Fahrzeug (1) nach einem der Ansprüche 5 bis 7,
**dadurch gekennzeichnet,**
**dass** der lange Schenkel (5a) in abgelegter Dachstellung nach unten weist.

## Claims

1. A convertible vehicle (1) comprising a roof (2) which is provided at least partially with a flexible cover (3), said roof (2) having assigned to it at least one abutment body (5) which supports the contour (L1;L2) of the cover (3) from below and which can be moved with a transverse, outward component (13) during its upward movement,
**characterised in that**
two lateral abutment bodies (5) are provided onto which a transverse bow (10) of the roof (2) can apply a force indirectly or directly, with a component (13) in the transverse vehicle direction, during the closing of the roof.

2. The convertible vehicle (1) according to claim 1, **characterised in that** the outer transverse edges of the transverse bow (10) each have a sliding surface (11) assigned to them to act upon a side (12) of the abutment bodies (5) facing away from the cover.

3. The convertible vehicle (1) according to claim 1, **characterised in that** the abutment bodies (5) are held and movable by a lateral linkage (6) which causes the roof movement and extends in a substantially vertical plane.

4. The convertible vehicle (1) according to any one of claims 1 to 3, **characterised in that** the abutment bodies (5) are formed by arched plate bodies.

5. The convertible vehicle (1) according to any one of claims 1 to 4, **characterised in that**, when the roof (2) is closed, each abutment body (5) comprises a leg (5a) extending longitudinally in the region of the upper roof edge (L1).

6. The convertible vehicle (1) according to any one of claims 1 to 5, **characterised in that**, when the roof (2) is closed, each abutment body (5) comprises a leg (5b) extending downwards towards a rear window (14).

7. The convertible vehicle (1) according to any one of claims 1 to 6, **characterised in that** the abutment bodies (5) are substantially L-shaped with a long leg (5a) pointing substantially in the longitudinal direction of the vehicle when the roof (2) is closed.

8. The convertible vehicle (1) according to any one of claims 5 to 7, **characterised in that** the long leg (5a) points downwards in the stowed position of the roof.

## Revendications

1. Véhicule cabriolet (1) comprenant un toit (2) qui est pourvu au moins partiellement d'une enveloppe flexible (3), au moins un corps de butée (5) étant associé audit toit (2) pour supporter le contour (L1;L2) de l'enveloppe (3) d'en bas, ce corps de butée (5) étant déplaçable, pendant son déplacement vers le haut, avec une composante (13) transversale dirigée vers l'extérieur,
**caractérisé en ce que**
l'on prévoit deux corps de butée latéraux (5) qui peuvent être soumis à une force avec une composante (13) en direction transversale du véhicule, ladite force étant exercée indirectement ou directement par un arceau transversal (10) du toit (2) lors de la fermeture du toit.

2. Véhicule cabriolet (1) selon la revendication 1, **caractérisé en ce qu'**une face de glissement (11) respective est associée à chaque bord extérieur transversal de l'arceau transversal (10) pour agir sur un côté (12) du corps de butée (5) détourné de l'enveloppe.

3. Véhicule cabriolet (1) selon la revendication 1, **caractérisé en ce que** les corps de butée (5) sont tenus et déplaçables par une tringlerie latérale (6) effectuant le déplacement du toit et s'étendant dans un plan sensiblement vertical.

4. Véhicule cabriolet (1) selon l'une quelconque des revendications 1 à 3, **caractérisé en ce que** les corps de butée (5) sont constitués par des corps sous forme de plaques bombées.

5. Véhicule cabriolet (1) selon l'une quelconque des revendications 1 à 4, **caractérisé en ce que**, lorsque le toit (2) est fermé, chaque corps de butée (5) présente un bras (5a) qui s'étend longitudinalement dans la région du bord supérieur (L1) du toit.

6. Véhicule cabriolet (1) selon l'une quelconque des revendications 1 à 5, **caractérisé en ce que**, lorsque le toit (2) est fermé, chaque corps de butée (5) présente un bras (5b) qui s'étend vers le bas en direction d'une lunette arrière (14).

7. Véhicule cabriolet (1) selon l'une quelconque des revendications 1 à 6, **caractérisé en ce que** les corps de butée (5) présentent sensiblement la forme d'un L avec un bras longue (5a) qui est orienté sensiblement dans la direction longitudinale du véhicule lorsque le toit (2) est fermé.

8. Véhicule cabriolet (1) selon l'une quelconque des revendications 5 à 7, **caractérisé en ce que** le bras longue (5a) est orienté vers le bas lorsque le toit se trouve dans sa position de dépose.
